# FASCICULE DE BREVET EUROPEEN

(11) **EP 3 551 473 B1**
(45) Date de publication et mention de la délivrance du brevet: **28.04.2021**
(21) Numéro de dépôt: 17821692.5
(22) Date de dépôt: 07.12.2017
(51) Int. Cl.: B60C 9/20

(54) **PNEUMATIQUE COMPORTANT UNE ARMATURE DE SOMMET ALLEGEE**
REIFEN MIT EINER ERLEICHTERTEN KRONENVERSTÄRKUNG
TYRE WITH A LIGHTENED CROWN REINFORCEMENT

(30) Priorité: 07.12.2016 FR 1662053
(43) Date de publication de la demande: 16.10.2019
(73) Titulaire: Compagnie Générale des Etablissements Michelin, 63000 Clermont-Ferrand (FR)
(72) Inventeur: DEGEORGES, Agnès, 63040 Clermont-Ferrand Cedex 9 (FR); LARDJANE, Aurore, 63040 Clermont-Ferrand Cedex 9 (FR)
(74) Mandataire: Le Cam, Stéphane Georges Elie
(86) Numéro de dépôt international: PCT/FR2017/053427
(87) Numéro de publication internationale: WO 2018/104668

(56) Documents cités:
- EP-A1- 0 399 795
- EP-A1- 3 028 873
- EP-A2- 0 551 124
- FR-A- 1 550 749

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques faisant avec la direction circonférentielle un angle compris entre 45° et 90°, cette nappe, dite de triangulation, étant radialement située entre l'armature de carcasse et la première nappe de sommet dite de travail, formée de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Par ailleurs, l'usage de pneumatiques sur des véhicules pour poids-lourds de type « approche chantier » conduit les pneumatiques à subir des chocs lors de roulages sur des sols caillouteux. Ces chocs sont bien entendu néfastes quant aux performances en termes d'endurance.

Il est encore connu de l'homme du métier d'augmenter le nombre de nappes constituant l'armature sommet pour améliorer l'endurance du pneumatique à l'égard de tels chocs.

Le document FR 1 550 749 décrit un pneumatique comportant plusieurs couches de travail dont les éléments de renforcement sont des câbles de petit diamètre.

Le document EP 3 028 873 décrit un pneumatique avec une épaisseur de mélange caoutchouteux importante entre la nappe de protection et la nappe de travail radialement la plus extérieure.

Quelles que soient l'une de ces solutions telles que présentées précédemment, la présence d'une ou plusieurs couches d'éléments de renforcement supplémentaire conduit à une masse plus importante du pneumatique et à des coûts de fabrication des pneumatiques plus importants.

L'allégement des nappes sommet de travail peut alors s'obtenir par exemples par une augmentation du pas de répartition des câbles ou bien par l'utilisation d'éléments de renforcement de plus petit diamètre et de moindre section comme cela est par exemple décrit dans le document US-3240249. A noter que très souvent cette réduction de diamètre et de section des éléments de renforcement s'accompagne d'une augmentation de la ténacité de l'acier venant limiter ou compenser la pénalisation en termes de force rupture.

Il est ainsi connu d'utiliser des éléments de renforcement plus petits pour alléger les pneumatiques, la masse étant d'une part réduite par une quantité de métal moindre et d'autre part par le volume de mélanges élastomériques qui diminue pour former les calandrages des couches d'éléments de renforcement.

Toutefois, la diminution de la quantité de métal ne va pas dans le sens de performances en termes d'endurance améliorées.

Notamment, lors d'un roulage accidentel sur un obstacle ponctuel de taille relativement importante, l'ensemble des nappes est soumis brutalement à une très grande déformation qui peut aller jusqu'à la rupture complète du bloc sommet. Ce type de dommage d'origine accidentelle est classiquement qualifié de « road hazard ».

Il s'avère que la tenue aux road hazards d'un pneumatique comportant des nappes sommet de travail allégées peut s'avérer très significativement amoindrie. Les efforts supplémentaires engendrés par la très grande déformation sont supportés par les nappes sommet de travail qui, étant allégées, se révèlent fortement sensibilisées au risque de rupture.

Un but de l'invention est ainsi de fournir des pneumatiques pour véhicules "Poids-Lourds", dont la masse est réduite en conservant des performances d'endurance et de tenue aux road hazards satisfaisantes.

Ce but est atteint selon l'invention par un pneumatique pour véhicule de type poids lourd, tel que défini dans la revendication 1, à armature de carcasse radiale comprenant une armature de sommet formée d'au moins deux couches de sommet de travail d'éléments de renforcement, lesdits éléments de renforcement de la couche de sommet de travail radialement la plus extérieure étant répartis avec un pas P, et d'au moins une couche de protection d'éléments de renforcement radialement extérieure auxdites au moins deux couches de sommet de travail, elle-même coiffée radialement d'une bande de roulement, ladite bande de roulement étant réunie à deux bourrelets par l'intermédiaire de deux flancs, les éléments de renforcement de la couche de sommet de travail radialement la plus extérieure étant radialement séparés des éléments de renforcement de la couche de protection radialement la plus proche de la couche de sommet de travail radialement la plus extérieure par des mélanges élastomériques dont l'épaisseur E₁ est supérieure à 1 mm et radialement séparés des éléments de renforcement de la couche de sommet de travail radialement la plus proche de la couche de sommet de travail radialement la plus extérieure par des mélanges élastomériques présentant une épaisseur E₂, les éléments de renforcement des couches de sommet de travail étant des câbles métalliques présentant un diamètre inférieur à 1.3 mm, au moins un fil de chaque câble métallique d'au moins une couche de sommet de travail étant de grade au moins UHT, le ratio, de l'épaisseur de mélanges élastomériques entre les éléments de renforcement de la couche de sommet de travail radialement la plus extérieure et les éléments de renforcement de la couche de protection radialement la plus proche de la couche de sommet de travail radialement la plus extérieure sur le pas de répartition des éléments de renforcement dans la couche de sommet de travail radialement la plus extérieure, E₁/P étant strictement supérieur à 0.56, le ratio, de l'épaisseur de mélanges élastomériques entre les éléments de renforcement de la couche de sommet de travail radialement la plus extérieure et les éléments de renforcement de la couche de sommet de travail radialement la plus proche de la couche de sommet de travail radialement la plus extérieure sur le pas de répartition des éléments de renforcement dans la couche de sommet de travail radialement la plus extérieure, E₂/P étant strictement supérieur à 0.30 et le ratio, de l'épaisseur de mélanges élastomériques entre les éléments de renforcement de la couche de sommet de travail radialement la plus extérieure et les éléments de renforcement de la couche de protection radialement la plus proche de la couche de sommet de travail radialement la plus extérieure sur l'épaisseur de mélanges élastomériques entre les éléments de renforcement de la couche de sommet de travail radialement la plus extérieure et les éléments de renforcement de la couche de sommet de travail radialement la plus proche de la couche de sommet de travail radialement la plus extérieure E₁/E₂ étant strictement inférieur à 1.8.

L'invention vise de préférence des pneumatiques de type gros poids-lourd destiné à être montés sur des roues dont le diamètre au siège (« diamètre au seat ») de la jante est supérieur ou égal à 20 pouces.

Au sens de l'invention, le diamètre d'un élément de renforcement est le diamètre du cercle circonscrit à la section de l'élément de renforcement, mesuré dans une coupe du pneumatique perpendiculaire à la direction moyenne de l'élément de renforcement.

Au sens de l'invention, le pas P entre deux éléments de renforcement consécutifs est la distance mesurée entre les centres des cercles circonscrits aux sections respectives des deux éléments de renforcement consécutifs, mesurée dans une coupe du pneumatique perpendiculaire à la direction moyenne des éléments de renforcement.

Les épaisseurs E₁ et E₂ sont mesurées selon une direction radiale dans une coupe méridienne du pneumatique au niveau du plan équatorial entre les éléments de renforcement de deux couches.

Au sens de l'invention, un « fil de grade au moins UHT», est un fil présentant une résistance mécanique à la rupture R exprimée en MPa telle que R ≥ 4180 - 2130xD, D étant le diamètre du fil exprimé en mm.

Selon une réalisation préférée de l'invention, les éléments de renforcement d'au moins une couche de travail sont des câbles comprenant une couche interne de M fil(s) interne(s) et une couche externe de N fils externes, la couche externe étant enroulée autour de la couche interne.

De préférence selon cette variante avantageuse de l'invention, M=1 ou 2 et N=5, 6, 7, 8 ou 9, de préférence M=1 et N=5 ou 6, ou M=2 et N=7, 8 ou 9.

En d'autre termes, avantageusement selon cette réalisation préférée de l'invention, au moins un des fils interne ou externe, et de préférence encore chaque fil interne et externe, de chaque câble d'au moins une couche de travail présente une résistance mécanique à la rupture R exprimée en MPa telle que R ≥ 4180 - 2130xD, D étant le diamètre du fil exprimé en mm.

De préférence encore selon l'invention, au moins un des fils interne ou externe, de préférence chaque fil interne et externe, de chaque câble d'au moins une couche de travail présente une résistance mécanique à la rupture R exprimée en MPa telle que R ≥ 4400 - 2000xD, D étant le diamètre du fil exprimé en mm

De préférence encore selon l'invention, les éléments de renforcement des couches de sommet de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4180 - 2130xD, D étant le diamètre du fil exprimé en mm.

Et préférentiellement encore selon l'invention, les éléments de renforcement desdites au moins deux couches de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4400 - 2000xD, D étant le diamètre du fil exprimé en mm.

Avantageusement selon l'invention, le ratio, de l'épaisseur de mélanges élastomériques entre les éléments de renforcement de la couche de sommet de travail radialement la plus extérieure et les éléments de renforcement de la couche de protection radialement la plus proche de la couche de sommet de travail radialement la plus extérieure sur le pas de répartition des éléments de renforcement dans la couche de sommet de travail radialement la plus extérieure, E₁/P est strictement supérieur à 0.57.

Avantageusement encore selon l'invention, le ratio, de l'épaisseur de mélanges élastomériques entre les éléments de renforcement de la couche de sommet de travail radialement la plus extérieure et les éléments de renforcement de la couche de sommet de travail radialement la plus proche de la couche de sommet de travail radialement la plus extérieure sur le pas de répartition des éléments de renforcement dans la couche de sommet de travail radialement la plus extérieure, E₂/P est strictement supérieur à 0.33.

Selon un mode de réalisation préféré de l'invention, l'épaisseur E₁ est supérieure à 1.3 mm et de préférence encore inférieure à 2.5 mm.

De préférence également selon l'invention, le ratio de l'épaisseur de mélanges élastomériques entre les éléments de renforcement de la couche de sommet de travail radialement la plus extérieure et les éléments de renforcement de la couche de protection radialement la plus proche de la couche de sommet de travail radialement la plus extérieure sur le pas de répartition des éléments de renforcement dans la couche de sommet de travail radialement la plus extérieure, E₁/P est inférieur à 1.2.

De préférence encore selon l'invention, le ratio, de l'épaisseur de mélanges élastomériques entre les éléments de renforcement de la couche de sommet de travail radialement la plus extérieure et les éléments de renforcement de la couche de sommet de travail radialement la plus proche de la couche de sommet de travail radialement la plus extérieure sur le pas de répartition des éléments de renforcement dans la couche de sommet de travail radialement la plus extérieure, E₂/P est inférieur à 0.8.

Les résultats obtenus avec des pneumatiques conformes à l'invention ont effectivement mis en évidence que les performances en termes d'endurance peuvent être conservées notamment lors de roulage sur sol caillouteux, l'armature sommet du pneumatique étant allégée.

Contre toute attente, les résultats ont effectivement mis en évidence que les pneumatiques selon l'invention peuvent être allégés en diminuant notamment la masse métal des couches de sommet de travail tout en conservant les propriétés d'endurance du sommet du pneumatique notamment à l'égard de chocs apparaissant sur la bande de roulement par exemple lors de roulage sur sol caillouteux.

Les inventeurs interprètent ces résultats par un choix de répartition des mélanges élastomériques de part et d'autre de la couche de travail radialement la plus extérieure en combinaison avec notamment le pas de répartition des éléments de renforcement dans la couche de sommet de travail radialement la plus extérieure qui semblent permettre une meilleure répartition des contraintes supportées par les éléments de renforcement dans chacune des couches de travail. Cette meilleure répartition des contraintes permet ainsi de retarder l'apparition d'éventuelles ruptures des éléments de renforcement lors de fortes sollicitations.

Le ratio E1/E2, de l'épaisseur de mélanges élastomériques entre les éléments de renforcement de la couche de sommet de travail radialement la plus extérieure et les éléments de renforcement de la couche de protection radialement la plus proche de la couche de sommet de travail radialement la plus extérieure sur l'épaisseur de mélanges élastomériques entre les éléments de renforcement de la couche de sommet de travail radialement la plus extérieure et les éléments de renforcement de la couche de sommet de travail radialement la plus proche de la couche de sommet de travail radialement la plus extérieure étant strictement inférieur à 1.8 favorise l'allégement du pneumatique. Avantageusement encore l'épaisseur de mélanges élastomériques entre les éléments de renforcement de la couche de sommet de travail radialement la plus extérieure et les éléments de renforcement de la couche de sommet de travail radialement la plus proche de la couche de sommet de travail radialement la plus extérieure E2 est strictement inférieure à 1 mm.

Selon une variante de réalisation de l'invention, les éléments de renforcement desdites au moins deux couches de sommet de travail sont croisés d'une couche à l'autre en faisant avec la direction circonférentielle des angles compris entre 10° et 45°.

De préférence encore, les éléments de renforcement desdites au moins deux couches de sommet de travail sont inextensibles.

Selon l'invention, les éléments de renforcement d'au moins une couche de protection sont orientés par rapport à la direction circonférentielle avec un angle compris entre 10° et 45° et de même sens que l'angle formé par les éléments de renforcement de la couche de travail qui lui est radialement la plus proche.

Avantageusement selon l'invention, les éléments de renforcement de la couche de protection sont élastiques.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large.

D'autres variantes peuvent encore prévoir que l'armature de sommet peut être complétée entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse. Avantageusement, ladite couche de triangulation est constituée de deux demi-couches positionnées axialement de part et d'autre du plan médian circonférentiel.

Dans le cas de ces variantes de réalisation de l'invention prévoyant la présence de couches de triangulation, il est encore possible d'envisager un allègement complémentaire du pneumatique avec des éléments de renforcement de la couche de triangulation qui sont semblables voire identiques aux éléments de renforcement des couches de travail selon l'invention et qui sont donc des câbles métalliques présentant un diamètre inférieur à 1.3 mm, au moins un fil de chaque câble métallique étant de grade au moins UHT.

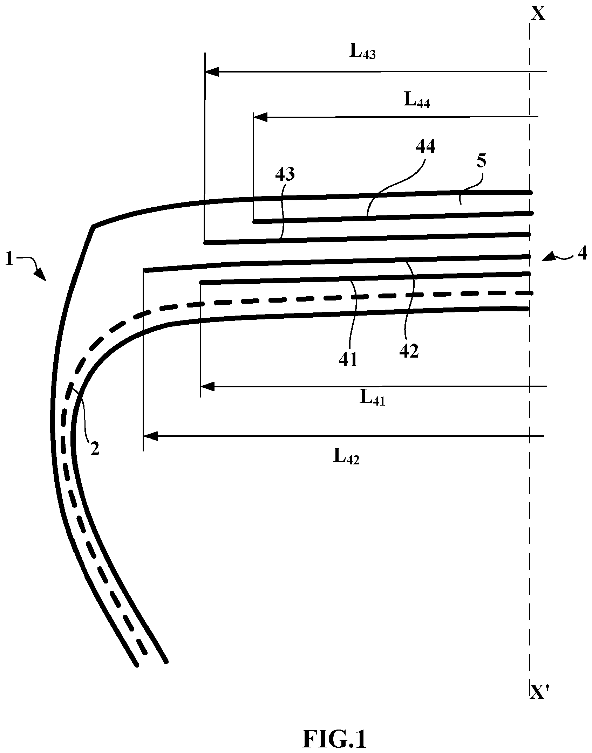

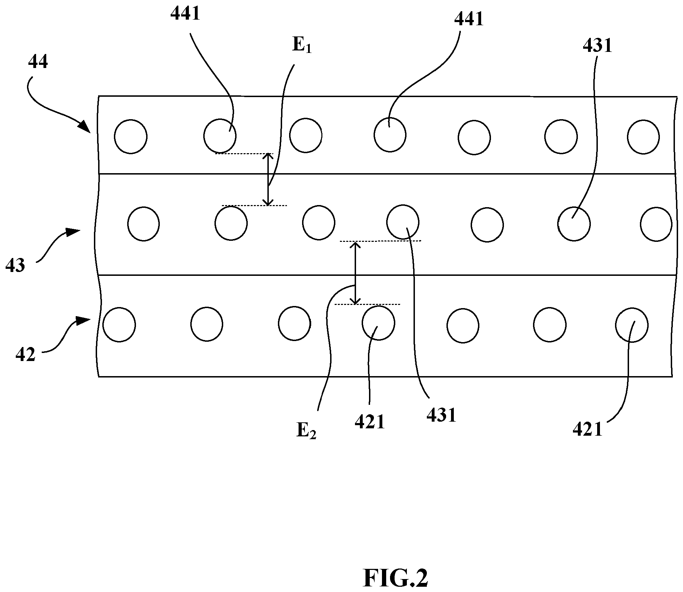

D'autres détails et caractéristiques avantageux de l'invention ressortiront ci-après de la description d'un exemple de réalisation de l'invention en référence aux figures 1 et 2 qui représentent :
- figure 1 une vue méridienne d'un schéma d'un pneumatique selon un mode de réalisation de l'invention,
- figure 2, une vue méridienne partielle d'une partie de l'armature sommet du pneumatique représenté sur la figure 1.

Les figures ne sont pas représentées à l'échelle pour en simplifier la compréhension.

La figure 1 ne représente qu'une demi-vue d'un pneumatique qui se prolonge de manière symétrique par rapport à l'axe XX' qui représente le plan médian circonférentiel, ou plan équatorial, du pneumatique.

Sur la figure 1, le pneumatique 1, de dimension 315/80 R 22.5, comprend une armature de carcasse radiale 2 ancrée dans deux bourrelets, non représentés sur la figure. L'armature de carcasse 2 est formée d'une seule couche de câbles métalliques. Ils comportent encore une bande de roulement 5.

Sur la figure 1, l'armature de carcasse 2 est frettée conformément à l'invention par une armature de sommet 4, formée radialement de l'intérieur à l'extérieur :
- d'une couche de triangulation 41 formée de câbles métalliques orientés d'un angle égal à 65°,
- d'une première couche de travail 42 formée de câbles métalliques orientés d'un angle égal à 26°, du même côté que les câbles de la couche de triangulation par rapport à la direction circonférentielle,
- d'une seconde couche de travail 43 formée de câbles métalliques orientés d'un angle égal à 18° et croisés avec les câbles métalliques de la première couche de travail, les câbles de chacune des couches de travail étant orientés de part et d'autre de la direction circonférentielle,
- d'une couche de protection 44 formées de câbles métalliques élastiques E18.23, dont le pas de répartition est égal à 2.5 mm, orientés d'un angle égal à 18°, du même côté que les câbles de la seconde couche de travail.
- La largeur axiale de la couche de triangulation 41 est égale à 110 mm.
- La largeur axiale de la première couche de travail 42 est égale à 119 mm.
- La largeur axiale de la deuxième couche de travail 43 est égale à 109 mm.
- La largeur axiale de la couche de protection 44 est égale à 88 mm.

Les éléments de renforcement des deux couches de travail sont des câbles métalliques de formule 9.30, de type UHT présentant un diamètre égal à 1.23 mm. Ils sont répartis dans chacune des couches de travail avec un pas P égal à 2 mm.

Les fils constituant les câbles métalliques présentent une résistance mécanique à la rupture R égale à 3556 MPa et satisfont donc la relation R ≥ 4180 - 2130xD.

La figure 2 illustre une vue partielle d'une partie de l'armature sommet selon une coupe méridienne du pneumatique.

Sur cette figure 2, on retrouve la première couche de travail 42 comportant des câbles 421, surmontée de la deuxième couche de travail 43 comportant des câbles 431, elle-même surmontée radialement de la couche protection 44 comportant des câbles 441.

L'épaisseur E₁ des mélanges élastomériques mesurée radialement entre les éléments de renforcement 431 de la deuxième couche de sommet de travail 43 radialement la plus extérieure et les éléments de renforcement 441 de la couche de protection 44 est égale à 1.39 mm.

Le ratio E₁/P est égal 0.70 et donc conformément à l'invention strictement supérieur à 0.56.

L'épaisseur E₂ des mélanges élastomériques mesurée radialement entre les éléments de renforcement 431 de la deuxième couche de sommet de travail 43 radialement la plus extérieure et les éléments de renforcement 421 de la première couche de sommet de travail 42 est égale à 0.78 mm.

Le ratio E₂/P est égal 0.39 et donc conformément à l'invention strictement supérieur à 0.30.

Le ratio E1/E2 est égal à 1.78 et donc conformément à l'invention strictement inférieur à 1.8.

La masse cumulée des couches de travail, de la couche de protection et de la couche de triangulation du pneumatique de référence, comprenant la masse des câbles métalliques et des mélanges de calandrage, se monte à 11.2 Kg.

Le pneumatique selon l'invention est comparé à un pneumatique de référence de même dimension qui diffère du pneumatique selon l'invention par des câbles métalliques des deux couches de travail qui sont des câbles de formule 11.35 de type SHT, présentant un diamètre égal 1.48 mm. Ils sont répartis dans chacune des couches de travail avec un pas égal à 2.6 mm.

L'épaisseur E₁ des mélanges élastomériques mesurée entre les éléments de renforcement de la deuxième couche de sommet de travail radialement la plus extérieure et les éléments de renforcement de la couche de protection du pneumatique de référence est égale à 1.4 mm.

Le ratio E₁/P est égal 0.54.

L'épaisseur E₂ des mélanges élastomériques mesurée entre les éléments de renforcement de la deuxième couche de sommet de travail radialement la plus extérieure et les éléments de renforcement de la première couche de sommet de travail du pneumatique de référence est égale à 0.8 mm.

Le ratio E₂/P est égal 0.31.

La masse cumulée des couches de travail, de la couche de protection et de la couche de triangulation du pneumatique de référence, comprenant la masse des câbles métalliques et des mélanges de calandrage, se monte à 12.7 Kg.

Des essais ont été réalisés avec des pneumatiques réalisés selon l'invention et avec le pneumatique de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance à celles des pneumatiques de référence lors de roulage sur des sols bitumineux.

Des tests visant à caractériser la résistance à la rupture d'une armature de sommet de pneumatique soumise à des chocs ont également été réalisés. Ces tests consistent en l'enfoncement de polars de forme cylindrique sur la bande de roulement du pneumatique gonflé à une pression recommandée. Les valeurs expriment l'énergie nécessaire pour obtenir la rupture du bloc sommet. Les valeurs sont exprimées à partir d'une base 100 correspondant à la valeur mesurée pour le pneumatique de référence.

| | |
|---|---|
| Référence | 100 |
| Invention | 100 |

Ces résultats montrent que malgré un allégement du pneumatique par une diminution de la masse de son armature sommet, l'énergie à rupture lors d'un choc sur la surface de la bande de roulement est sensiblement équivalente.

Par ailleurs, des mesures de résistance au roulement ont été réalisées.

Les résultats des mesures sont présentés dans le tableau suivant ; elles sont exprimées en Kg/t, une valeur de 100 étant attribuée au pneumatique de référence.

| | |
|---|---|
| Référence | 100 |
| Invention | 99 |

## Revendications

1. Pneumatique (1) pour véhicule de type poids lourd, à armature de carcasse radiale (2) comprenant une armature de sommet (4) formée d'au moins deux couches de sommet de travail d'éléments de renforcement (42, 43), lesdits éléments de renforcement de la couche de sommet de travail radialement la plus extérieure (43) étant répartis avec un pas P, et d'au moins une couche de protection d'éléments de renforcement (44) radialement extérieure auxdites au moins deux couches de sommet de travail (42, 43), lesdits éléments de renforcement de la couche de protection (44) étant orientés par rapport à la direction circonférentielle avec un angle compris entre 10° et 45° et de même sens que l'angle formé par les éléments de renforcement de la couche de travail (43) qui lui est radialement la plus proche, elle-même coiffée radialement d'une bande de roulement (5), ladite bande de roulement (5) étant réunie à deux bourrelets par l'intermédiaire de deux flancs, les éléments de renforcement (431) de la couche de sommet de travail radialement la plus extérieure (43) étant radialement séparés des éléments de renforcement (441) de la couche de protection (44) radialement la plus proche de la couche de sommet de travail radialement la plus extérieure (43) par des mélanges élastomériques dont l'épaisseur E₁ est supérieure à 1 mm et radialement séparés des éléments de renforcement (421) de la couche de sommet de travail (42) radialement la plus proche de la couche de sommet de travail radialement la plus extérieure (43) par des mélanges élastomériques présentant une épaisseur E₂, les éléments de renforcement (421, 431) des couches de sommet de travail (42, 43) étant des câbles métalliques dont au moins un fil de chaque câble métallique d'au moins une couche de sommet de travail est de grade au moins UHT, le ratio, de l'épaisseur E₁ de mélanges élastomériques entre les éléments de renforcement (431) de la couche de sommet de travail radialement la plus extérieure (43) et les éléments de renforcement (441) de la couche de protection (44) radialement la plus proche de la couche de sommet de travail radialement la plus extérieure (43) sur le pas de répartition P des éléments de renforcement (431) dans la couche de sommet de travail radialement la plus extérieure (43), E₁/P étant strictement supérieur à 0.56, le ratio, de l'épaisseur E₂ de mélanges élastomériques entre les éléments de renforcement (431) de la couche de sommet de travail radialement la plus extérieure (43) et les éléments de renforcement (421) de la couche de sommet de travail (42) radialement la plus proche de la couche de sommet de travail radialement la plus extérieure (43) sur le pas de répartition P des éléments de renforcement (431) dans la couche de sommet de travail radialement la plus extérieure (43), E₂/P étant strictement supérieur à 0.30 **caractérisé en ce que** les éléments de renforcement (421, 431) des couches de sommet de travail (42, 43) sont des câbles métalliques présentant un diamètre inférieur à 1.3 mm et **en ce que** le ratio, de l'épaisseur E₁ de mélanges élastomériques entre les éléments de renforcement (431) de la couche de sommet de travail radialement la plus extérieure (43) et les éléments de renforcement (441) de la couche de protection (44) radialement la plus proche de la couche de sommet de travail radialement la plus extérieure (43) sur l'épaisseur E₂ de mélanges élastomériques entre les éléments de renforcement (431) de la couche de sommet de travail radialement la plus extérieure (43) et les éléments de renforcement (421) de la couche de sommet de travail (42) radialement la plus proche de la couche de sommet de travail radialement la plus extérieure E₁/E₂ est strictement inférieur à 1.8.

2. Pneumatique (1) selon la revendication 1, **caractérisé en ce qu'**il est destiné à être monté sur des roues de diamètre au siège supérieur ou égal à 20 pouces.

3. Pneumatique (1) selon la revendication 1 ou 2, **caractérisé en ce que** les éléments de renforcement (421, 431) d'au moins une couche de sommet de travail (42, 43) sont des câbles comprenant une couche interne de M fil(s) interne(s) et une couche externe de N fils externes, la couche externe étant enroulée autour de la couche interne.

4. Pneumatique (1) selon la revendication 3, **caractérisé en ce que** M=1 et N=5 ou 6 ou M=2 et N=7, 8 ou 9.

5. Pneumatique (1) selon l'une des revendications 3 ou 4, **caractérisé en ce que** les éléments de renforcement (421, 431) des couches de sommet de travail (42, 43) sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4180 - 2130xD, D étant le diamètre du fil exprimé en mm.

6. Pneumatique selon l'une des revendications 3 à 5, **caractérisé en ce que** les éléments de renforcement (421, 431) desdites au moins deux couches de travail (42, 43) sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4400 - 2000xD, D étant le diamètre du fil exprimé en mm.

7. Pneumatique (1) selon l'une des revendications précédentes, **caractérisé en ce que** les éléments de renforcement (421, 431) desdites au moins deux couches de sommet de travail (42, 43) sont croisés d'une couche à l'autre en faisant avec la direction circonférentielle des angles compris entre 10° et 45°.

8. Pneumatique (1) selon l'une des revendications précédentes, **caractérisé en ce que** les éléments de renforcement desdites au moins deux couches de sommet de travail (42, 43) sont des câbles métalliques inextensibles.

9. Pneumatique (1) selon l'une des revendications précédentes, **caractérisé en ce que** les éléments de renforcement (441) de ladite au moins une couche de protection (44) sont des câbles métalliques élastiques.

10. Pneumatique (1) selon l'une des revendications précédentes, **caractérisé en ce que** l'armature de sommet (4) comporte en outre une couche de triangulation (41) formée d'éléments de renforcement métalliques faisant avec la direction circonférentielle des angles supérieurs à 45°.

## Patentansprüche

1. Reifen (1) für ein Fahrzeug vom Typ Lastkraftwagen mit radialer Karkassenbewehrung (2), umfassend eine Scheitelbewehrung (4), die ausgebildet ist aus zumindest zwei Arbeitsscheitelschichten von Verstärkungselementen (42, 43), wobei die Verstärkungselemente der radial äußersten Arbeitsscheitelschicht (43) mit einem Abstand P verteilt sind, und aus zumindest einer Schutzschicht von Verstärkungselementen (44) radial außerhalb der zumindest zwei Arbeitsscheitelschichten (42, 43), wobei die Verstärkungselemente der Schutzschicht (44) relativ zur Umfangsrichtung mit einem Winkel zwischen 10° und 45° und von derselben Richtung wie der Winkel, der durch die Verstärkungselemente der ihr radial am nächsten liegenden Arbeitsschicht (43) ausgebildet ist, ausgerichtet sind, die ihrerseits radial von einem Laufstreifen (5) bedeckt ist, wobei der Laufstreifen (5) über zwei Seitenwände mit zwei Wülsten verbunden ist, wobei die Verstärkungselemente (431) der radial äußersten Arbeitsscheitelschicht (43) von den Verstärkungselementen (441) der Schutzschicht (44), die der radial äußersten Arbeitsscheitelschicht (43) radial am nächsten ist, durch Elastomermischungen radial getrennt sind, deren Dicke E₁ mehr als 1 mm beträgt, und von den Verstärkungselementen (421) der Arbeitsscheitelschicht (42), die der radial äußersten Arbeitsscheitelschicht (43) radial am nächsten ist, durch Elastomermischungen mit einer Dicke E₂ radial getrennt sind,
wobei die Verstärkungselemente (421, 431) der Arbeitsscheitelschichten (42, 43) Metallseile sind, von denen mindestens ein Draht jedes Metallseils mindestens einer Arbeitsscheitelschicht zumindest vom UHT-Grad ist,
wobei das Verhältnis der Dicke E₁ von Elastomermischungen zwischen den Verstärkungselementen (431) der radial äußersten Arbeitsscheitelschicht (43) und den Verstärkungselementen (441) der Schutzschicht (44), die der radial äußersten Arbeitsscheitelschicht (43) radial am nächsten ist, zum Verteilungsabstand P der Verstärkungselemente (431) in der radial äußersten Arbeitsscheitelschicht (43), E₁/P, streng größer als 0,56 ist,
wobei das Verhältnis der Dicke E₂ von Elastomermischungen zwischen den Verstärkungselementen (431) der radial äußersten Arbeitsscheitelschicht (43) und den Verstärkungselementen (421) der Arbeitsscheitelschicht (42), die der radial äußersten Arbeitsscheitelschicht (43) radial am nächsten ist, zum Verteilungsabstand P der Verstärkungselemente (431) in der radial äußersten Arbeitsscheitelschicht (43), E₂/P, streng größer als 0,30 ist,
**dadurch gekennzeichnet, dass** die Verstärkungselemente (421, 431) der Arbeitsscheitelschichten (42, 43) Metallseile mit einem Durchmesser von weniger als 1,3 mm sind, und dadurch, dass das Verhältnis der Dicke E₁ von Elastomermischungen zwischen den Verstärkungselementen (431) der radial äußersten Arbeitsscheitelschicht (43) und den Verstärkungselementen (441) der Schutzschicht (44), die der radial äußersten Arbeitsscheitelschicht (43) radial am nächsten ist, zur Dicke E₂ von Elastomermischungen zwischen den Verstärkungselementen (431) der radial äußersten Arbeitsscheitelschicht (43) und den Verstärkungselementen (421) der Arbeitsscheitelschicht (42), die der radial äußersten Arbeitsscheitelschicht radial am nächsten ist, E₁/E₂, streng kleiner als 1,8 ist.

2. Reifen (1) nach Anspruch 1, **dadurch gekennzeichnet, dass** er dazu bestimmt ist, auf Räder mit einem Sitzdurchmesser von 20 Zoll oder mehr montiert zu werden.

3. Reifen (1) nach Anspruch 1 oder 2, **dadurch gekennzeichnet, dass** die Verstärkungselemente (421, 431) zumindest einer Arbeitsscheitelschicht (42, 43) Seile sind, die eine innere Schicht aus M inneren Drähten und eine äußere Schicht aus N äußeren Drähten umfassen, wobei die äußere Schicht um die innere Schicht gewickelt ist.

4. Reifen (1) nach Anspruch 3, **dadurch gekennzeichnet, dass** M = 1 und N = 5 oder 6 oder M = 2 und N = 7, 8 oder 9.

5. Reifen (1) nach einem der Ansprüche 3 oder 4, **dadurch gekennzeichnet, dass** die Verstärkungselemente (421, 431) der Arbeitsscheitelschichten (42, 43) Seile sind, die eine innere Schicht aus M inneren Drähten und eine äußere Schicht aus N äußeren Drähten umfassen, wobei die äußere Schicht um die innere Schicht gewickelt ist, wobei M = 1 oder 2 und N = 5, 6, 7, 8, wobei zumindest einer der inneren oder äußeren Drähte jedes Seils und vorzugsweise jeder innere und äußere Draht jedes Seils eine solche mechanische Bruchfestigkeit R, ausgedrückt in MPa, aufweist, dass R ≥ 4180 - 2130 x D ist, wobei D der Durchmesser des Drahtes, ausgedrückt in mm, ist.

6. Reifen nach einem der Ansprüche 3 bis 5, **dadurch gekennzeichnet, dass** die Verstärkungselemente (421, 431) der zumindest zwei Arbeitsschichten (42, 43) Seile sind, die eine innere Schicht aus M inneren Drähten und eine äußere Schicht aus N äußeren Drähten umfassen, wobei die äußere Schicht um die innere Schicht gewickelt ist, wobei M = 1 oder 2 und N = 5, 6, 7, 8, wobei zumindest einer der inneren oder äußeren Drähte jedes Seils und vorzugsweise jeder innere und äußere Draht jedes Seils eine solche mechanische Bruchfestigkeit R, ausgedrückt in MPa, aufweist, dass R ≥ 4400 - 2000 x D ist, wobei D der Durchmesser des Drahtes, ausgedrückt in mm, ist.

7. Reifen (1) nach einem der vorhergehenden Ansprüche, **dadurch gekennzeichnet, dass** sich die Verstärkungselemente (421, 431) der zumindest zwei Arbeitsscheitelschichten (42, 43) von einer Schicht zur anderen überkreuzen und dabei mit der Umfangsrichtung Winkel zwischen 10° und 45° ausbilden.

8. Reifen (1) nach einem der vorhergehenden Ansprüche, **dadurch gekennzeichnet, dass** die Verstärkungselemente der mindestens zwei Arbeitsscheitelschichten (42, 43) nicht dehnbare Metallseile sind.

9. Reifen (1) nach einem der vorhergehenden Ansprüche, **dadurch gekennzeichnet, dass** die Verstärkungselemente (441) der zumindest einen Schutzschicht (44) elastische Metallseile sind.

10. Reifen (1) nach einem der vorhergehenden Ansprüche, **dadurch gekennzeichnet, dass** die Scheitelbewehrung (4) außerdem eine Triangulationsschicht (41) aufweist, die aus metallischen Verstärkungselementen ausgebildet ist, die mit der Umfangsrichtung Winkel von mehr als 45° bilden.

## Claims

1. Tyre (1) for a vehicle of heavy duty type, having a radial carcass reinforcement (2) comprising a crown reinforcement (4) formed of at least two working crown layers of reinforcing elements (42, 43), said reinforcing elements of the radially outermost working crown layer (43) being distributed with a spacing P, and of at least one protective layer of reinforcing elements (44) that is radially on the outside of said at least two working crown layers (42, 43), said reinforcing elements of the protective layer (44) being oriented relative to the circumferential direction at an angle of between 10° and 45° and in the same direction as the angle formed by the reinforcing elements of the working layer (43) that is radially closest thereto, which crown reinforcement is itself capped radially by a tread (5), said tread (5) being connected to two beads via two sidewalls, the reinforcing elements (431) of the radially outermost working crown layer (43) being radially separated from the reinforcing elements (441) of the protective layer (44) that is radially closest to the radially outermost working crown layer (43) by elastomer compounds of which the thickness E₁ is greater than 1 mm, and radially separated from the reinforcing elements (421) of the working crown layer (42) that is radially closest to the radially outermost working crown layer (43) by elastomer compounds having a thickness E₂, the reinforcing elements (421, 431) of the working crown layers (42, 43) being metal cords in which at least one thread of each metal cord of at least one working crown layer is of at least UHT grade, the ratio, of the thickness E₁ of elastomer compounds between the reinforcing elements (431) of the radially outermost working crown layer (43) and the reinforcing elements (441) of the protective layer (44) that is radially closest to the radially outermost working crown layer (43) to the spacing P at which the reinforcing elements (431) are distributed in the radially outermost working crown layer (43), E₁/P being strictly greater than 0.56, the ratio, of the thickness E₂ of elastomer compounds between the reinforcing elements (431) of the radially outermost working crown layer (43) and the reinforcing elements (421) of the working crown layer (42) that is radially closest to the radially outermost working crown layer (43) to the spacing P at which the reinforcing elements (431) are distributed in the radially outermost working crown layer (43), E₂/P being strictly greater than 0.30, **characterized in that** the reinforcing elements (421, 431) of the working crown layers (42, 43) are metal cords having a diameter less than 1.3 mm and **in that** the ratio, of the thickness E₁ of elastomer compounds between the reinforcing elements (431) of the radially outermost working crown layer (43) and the reinforcing elements (441) of the protective layer (44) that is radially closest to the radially outermost working crown layer (43) to the thickness E₂ of elastomer compounds between the reinforcing elements (431) of the radially outermost working crown layer (43) and the reinforcing elements (421) of the working crown layer (42) that is radially closest to the radially outermost working crown layer, E₁/E₂ is strictly less than 1.8.

2. Tyre (1) according to Claim 1, **characterized in that** it is intended to be mounted on wheels with a seat diameter greater than or equal to 20 inches.

3. Tyre (1) according to Claim 1 or 2, **characterized in that** the reinforcing elements (421, 431) of at least one working crown layer (42, 43) are cords comprising an internal layer of M internal thread(s) and an external layer of N external threads, the external layer being wound around the internal layer.

4. Tyre (1) according to Claim 3, **characterized in that** M=1 and N=5 or 6, or M=2 and N=7, 8 or 9.

5. Tyre (1) according to either of Claims 3 and 4, **characterized in that** the reinforcing elements (421, 431) of the working crown layers (42, 43) are cords comprising an internal layer of M internal thread(s) and an external layer of N external threads, the external layer being wound around the internal layer, with M=1 or 2 and N=5, 6, 7 or 8, at least one of the internal or external threads of each cord, and preferably each internal and external thread of each cord, exhibiting a mechanical breaking strength R expressed in MPa such that R ≥ 4180 - 2130xD, D being the diameter of the thread expressed in mm.

6. Tyre according to one of Claims 3 to 5, **characterized in that** the reinforcing elements (421, 431) of said at least two working layers (42, 43) are cords comprising an internal layer of M internal thread(s) and an external layer of N external threads, the external layer being wound around the internal layer, with M=1 or 2 and N=5, 6, 7 or 8, at least one of the internal or external threads of each cord, and preferably each internal and external thread of each cord, exhibiting a mechanical breaking strength R expressed in MPa such that R ≥ 4400 - 2000xD, D being the diameter of the thread expressed in mm.

7. Tyre (1) according to one of the preceding claims, **characterized in that** the reinforcing elements (421, 431) of said at least two working crown layers (42, 43) are crossed from one layer to the other, making angles of between 10° and 45° with the circumferential direction.

8. Tyre (1) according to one of the preceding claims, **characterized in that** the reinforcing elements of said at least two working crown layers (42, 43) are inextensible metal cords.

9. Tyre (1) according to one of the preceding claims, **characterized in that** the reinforcing elements (441) of said at least one protective layer (44) are elastic metal cords.

10. Tyre (1) according to one of the preceding claims, **characterized in that** the crown reinforcement (4) also has a triangulation layer (41) formed of metal reinforcing elements forming angles of greater than 45° with the circumferential direction.
